# EUROPEAN PATENT APPLICATION

(11) **EP 4 485 956 A1**
(43) Date of publication of application: **01.01.2025**
(21) Application number: 23756101.4
(22) Date of filing: 23.01.2023
(51) Int. Cl.: H04N 23/56, G03B 7/00, G03B 15/00, G03B 15/03, G03B 15/05, H04N 23/60, H04N 23/63

(54) **STROBOSCOPE**

(30) Priority: 21.02.2022 JP 2022024673
(71) Applicant: KABUSHIKI KAISHA TOYOTA JIDOSHOKKI, Kariya-shi, Aichi 448-8671 (JP)
(72) Inventor: SUZUKI Akihiro, Kariya-shi, Aichi 448-8671 (JP)
(74) Representative: TBK
(86) International application number: PCT/JP2023/001978
(87) International publication number: WO 2023/157573

(57) **Abstract**

A stroboscope (10) comprises a strobe unit and a communication unit. The strobe unit includes: a light emitter (11); a camera (12); and a trigger control portion (13) Which outputs to the light emitter (11) a trigger signal for causing the light emitter (11) to emit light. The communication unit transmits image-capture data including captured images captured by the camera (12) to a transmission target. The transmission target is an off-site communication terminal (50) having a display screen, or a cloud (40) which transfers data transmitted from the communication unit to the off-site communication terminal (50).

## Description

### TECHNICAL FIELD

The present invention relates to a stroboscope.

### BACKGROUND ART

Observation with a stroboscope has been conventionally performed. The stroboscope of the Patent Document 1 includes a video camera. In this case, an observation target is not only observed visually but also captured by the video camera.

### Citation List

### Patent Document

Patent Document 1: Japanese Utility Model Application Publication No. S55-118121

### SUMMARY OF INVENTION

### Technical Problem

Not only an on-site operator located in a worksite where the observation target is present but also an off-site operator in a remote place may observe the observation target with the stroboscope. The observation by the off-site operator is performed as follows, for example. Firstly, the on-site operator stores image data obtained by capturing the observation target with a camera in an external memory. The on-site operator moves the image data from the external memory to a communication terminal of the on-site operator. The on-site operator uses a mail function or the like of the communication terminal of the on-site operator to send the image date to a communication terminal of the off-site operator. The communication terminal of the off-site operator receives the image data. The off-site operator observes the observation target using the received image data. In this case, there is a time lag between when the video camera of the stroboscope captures an image and when the off-site operator observes the observation target. Accordingly, it has been desired to shorten a time required until the off-site operator observes the observation target.

### Solution to Problem

A stroboscope to solve the above-described problem includes: a strobe device including a light-emitting device, a camera, and a trigger control unit that outputs a trigger signal to the light-emitting device, the trigger signal causing the light-emitting device to emit light; and a communication device configured to send image data including an image captured by the camera to a data receiver. The data receiver is an external communication terminal having a display screen or an external server that forwards the image data sent from the communication device to the external communication terminal.

The communication device sends the image data to the external communication terminal or the external server. When the communication device sends the image data to the external server, the external server forwards the image data received from the communication device to the external communication terminal. An off-site operator located in a remote place can observe the observation target by the display screen of the external communication terminal. An on-site operator located in a worksite does not need to send the image data to the external communication terminal, so that a time required until the off-site operator observes the observation target is shortened.

In the above-described stroboscope, the communication device may send the image data to an input/output device having a display unit and an input unit and may send the same data as the image data sent to the input/output device to the data receiver.

The communication device also sends the image data to the input/output device. Accordingly, the on-site operator can observe the observation target by the display unit of the input/output device. As a result, the on-site operator can observe the observation target also in a case where it is difficult for the on-site operator to visually observe the observation target. In addition, the communication device sends the same data as the image data sent to the input/output device to the data receiver. Thus, the same image data as the image data displayed on the display unit of the input/output device are displayed on the display screen of the external communication terminal, and thus, the on-site operator and the off-site operator can share the image data. Furthermore, the off-site operator can use the image data as a reference when controlling the strobe device from the remote place.

In the above-described stroboscope, the communication device may send or receive text data to or from the data receiver and the input/output device.

The on-site operator and the off-site operator can communicate with each other through chats.

In the above-described stroboscope, the communication device may include an image processing unit that executes image processing on the image data, and receive marking data from the data receiver and the input/output device, the marking data being a data for indicating a particular position on the image data. The image processing unit may superimposedly display a marker on the image data based on the marking data, the marker being a sign used for indicating the particular position on the image data. The communication device may send the image data on which the marker is superimposedly displayed to the data receiver and the input/output device.

The on-site operator and the off-site operator can share the particular position on the image data by the marker which is superimposedly displayed on the image data. As a result, the on-site operator and the off-site operator can communicate with each other smoothly.

In the above-described stroboscope, the strobe device and the communication device may be separate entities.

When the strobe device and the communication device are integrated with each other, a space where both the strobe device and the communication device are disposed is required, which makes observation difficult in a narrow place. On the contrary, when the strobe device and the communication device are the separate entities, it is only necessary to secure a space where the strobe device is disposed, which allows the observation in the narrow place.

### Advantageous Effects of Invention

According to the present invention, a time required until the off-site operator observes the observation target is shortened.

### BRIEF DESCRIPTION OF DRAWINGS

FIG. 1 is a configuration diagram of a stroboscope, a loom, an on-site communication terminal, and an off-site communication terminal.
FIG. 2 is a view for explanation showing a relationship between external input signals and trigger signals.
FIG. 3 is a configuration diagram of a controller.
FIG. 4 is a view schematically illustrating contents displayed on a touch panel of the on-site communication terminal.
FIG. 5 is a view schematically illustrating contents displayed on a display screen of the off-site communication terminal.

### DESCRIPTION OF EMBODIMENTS

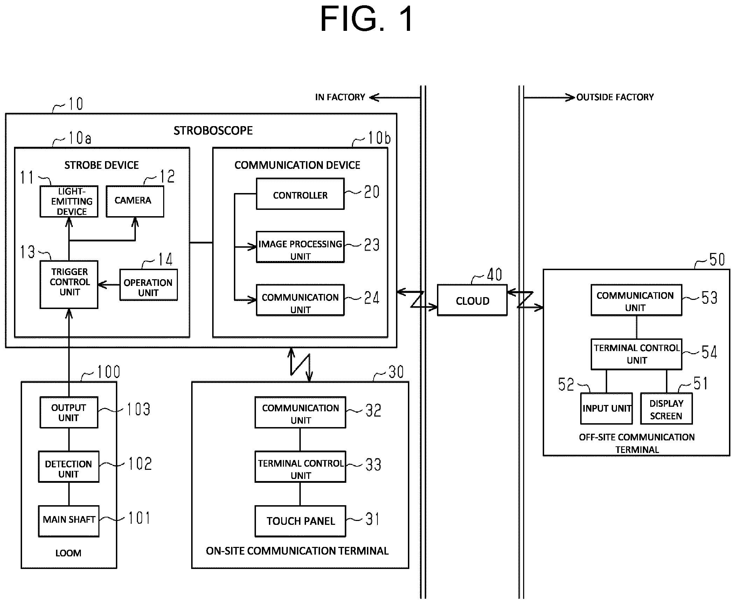

The following will describe an embodiment of a stroboscope with reference to FIGS. 1 to 5. The stroboscope of the present embodiment is used for adjusting a loom. An observation target to be observed with the stroboscope of the present embodiment is a weft yarn. In the present embodiment, a loom 100 is an air jet loom in which a weft yarn is inserted by air.

### <<Configuration of loom>>

As illustrated in FIG. 1, the loom 100 includes a main shaft 101 and a nozzle from which a weft yarn is injected and which is not illustrated. The main shaft 101 is driven by a main motor, which is not illustrated. A timing at which the weft yarn is injected from the nozzle corresponds to a rotation angle of the main shaft 101. Specifically, when the main shaft 101 rotates by a predetermined angle from a particular rotation angle, the weft yarn is injected from the nozzle. In the following description, the particular rotation angle of the main shaft 101 is referred to as a reference angle. Furthermore, an angle that is delayed from the reference angle is referred to as a delay angle.

The loom 100 includes a detection unit 102 and an output unit 103. The detection unit 102 detects the rotation angle of the main shaft 101. The detection unit 102 is, for example, a rotary encoder. The detection unit 102 is connected to the output unit 103. The detection unit 102 sends a detection result to the output unit 103. The output unit 103 outputs signals to the stroboscope every time the rotation angle of the main shaft 101 detected by the detection unit 102 becomes the reference angle set in advance. For example, when the reference angle is 0 [°], the output unit 103 outputs signals every time the rotation angle of the main shaft 101 becomes 0 [°].

### <<Configuration of stroboscope>>

A stroboscope 10 includes a strobe device 10a and a communication device 10b. In the present embodiment, the strobe device 10a and the communication device 10b are separate entities. The strobe device 10a is connected to the communication device 10b. In the present embodiment, the strobe device 10a is connected to the communication device 10b through a connecting cable in a wired connection.

### <Strobe device>

The strobe device 10a includes a light-emitting device 11, a camera 12, a trigger control unit 13, and an operation unit 14.

### <Light-emitting device>

The light-emitting device 11 is, for example, an LED light. The light-emitting device 11 is provided on a surface of a casing of the strobe device 10a, which is not illustrated. The light-emitting device 11 is connected to the trigger control unit 13. The light-emitting device 11 emits light in response to trigger signals input from the trigger control unit 13.

### <Camera>

The camera 12 is an imaging device. The camera 12 includes an image sensor. The camera 12 is provided on the surface of the casing of the strobe device 10a such that an area illuminated by the light-emitting device 11 is capturable. The camera 12 is connected to the trigger control unit 13. The camera 12 captures an image in response to the trigger signals input from the trigger control unit 13.

The strobe device 10a is disposed with respect to the loom 100 so that the light-emitting device 11 illuminates the weft yarn and the weft yarn is captured by the camera 12. The strobe device 10a may be fixed at a desired position by a fixing device, which is not illustrated.

### <Trigger control unit>

The trigger control unit 13 has a processor and a memory. Examples of the processor include a CPU (Central processing Unit), a GPU (Graphics Processing Unit), and a DSP (Digital Signal Processor). The memory includes a RAM (Random Access Memory) and a ROM (Read Only Memory). The memory stores program codes or commands configured to cause the processor to execute processes. The memory, that is, a computer-readable medium includes any available medium that is accessible by a general purpose computer or a dedicated computer. The trigger control unit 13 may include a hardware circuit such as an ASIC (Application Specific Integrated Circuit) or an FPGA (Field Programmable Gate Array). The trigger control unit 13, which is a processing circuit, may include one or more processors for operating in according with the computer programs, one or more hardware circuits such the ASIC or the FPGA, or a combination thereof.

The trigger control unit 13 controls the trigger signals. As described above, the trigger signals of the present embodiment are signals for causing the light-emitting device 11 to emit light and for causing the camera 12 to capture an image. The trigger control unit 13 is connected to the output unit 103 of the loom 100. The signals output from the output unit 103 are input to the trigger control unit 13 as external input signals. In addition, the trigger control unit 13 is connected to the operation unit 14. The delay angle is input to the trigger control unit 13 from the operation unit 14 or the communication device 10b. The trigger control unit 13 controls the trigger signals based on the external input signals input from the loom 100 and the delay angle input from the operation unit 14 or the communication device 10b.

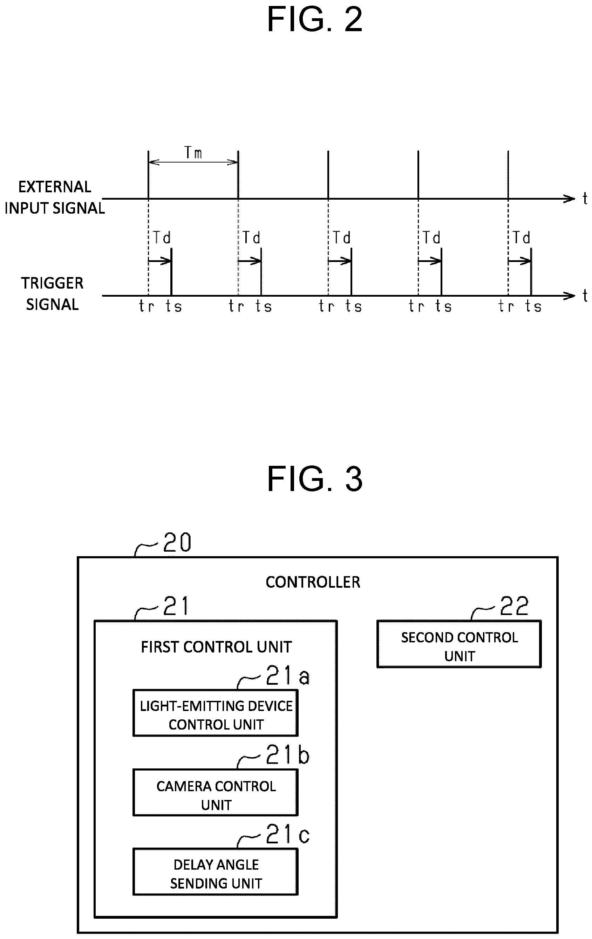

As illustrated in FIG. 2, the trigger control unit 13 obtains a rotation period Tm of the main shaft 101 from an interval between inputs of the external input signals. The trigger control unit 13 converts the delay angle into a delay time Td using the rotation period Tm of the main shaft 101 and the reference angle. The trigger control unit 13 outputs the trigger signals to the light-emitting device 11 and the camera 12 at a time ts when the delay time Td has passed from a time tr when the external input signals are input. That is, the trigger control unit 13 outputs the trigger signals to the light-emitting device 11 and the camera 12 when the rotation angle of the main shaft 101 rotates by the delay angle from the reference angle.

### <Operation unit>

The operation unit 14 is provided in the casing of the strobe device 10a. The operation unit 14 is a unit with which an operator operates the stroboscope 10. In the present embodiment, the operator may input parameters related to the light-emitting device 11, input parameters related to the camera 12, input the delay angle, and select an operation mode with the operation unit 14. Note that the parameters related to the light-emitting device 11, the parameters related to the camera 12, and the operation mode will be described later. The operation unit 14 includes, for example, a dial for inputting the delay angle and operation buttons for inputting the parameters related to the light-emitting device 11 and the camera 12 and for selecting the operation mode. The operator performs various operations of the strobe device 10a with the operation unit 14 while checking a display screen which is provided on the casing of the strobe device 10a and is not illustrated. Furthermore, the operator may check the currently set parameters, delay angle, and operation mode on the display screen.

### <Communication device>

As illustrated in FIG. 1, the communication device 10b includes a controller 20, an image processing unit 23, and a communication unit 24.

### <Controller>

The controller 20 includes a processor and a memory. Examples of the processor include a CPU (Central processing Unit), a GPU (Graphics Processing Unit), and a DSP (Digital Signal Processor). The memory includes a RAM (Random Access Memory) and a ROM (Read Only Memory). The memory stores program codes or commands configured to cause the processor to execute processes. The memory, that is, a computer-readable medium includes any available medium that is accessible by a general purpose computer or a dedicated computer. The controller 20 may include a hardware circuit such as an ASIC (Application Specific Integrated Circuit) or an FPGA (Field Programmable Gate Array). The controller 20, which is a processing circuit, may include one or more processors for operating in accordance with the computer programs, one or more hardware circuits such as the ASIC or the FPGA, or a combination thereof.

As illustrated in FIG. 3, the controller 20 of the present embodiment includes a first control unit 21 that controls the strobe device 10a and a second control unit 22 that controls the communication device 10b.

The first control unit 21 has, for example, a light-emitting device control unit 21a, a camera control unit 21b, and a delay angle sending unit 21c. The light-emitting device control unit 21a controls the parameters related to the light-emitting device 11. The parameters related to the light-emitting device 11 represent a color of light emitted by the light-emitting device 11 and a light emission time, for example. The camera control unit 21b controls the parameters related to the camera 12. The parameters related to the camera 12 represent a gain and a gamma of the camera 12, for example. The parameters related to the light-emitting device 11 and the camera 12 are input from the operation unit 14 or an off-site communication terminal 50, which is described later. When the delay angle is input from the off-site communication terminal 50, which is described later, to the delay angle sending unit 21c, the delay angle sending unit 21c sends the input delay angle to the trigger control unit 13.

### <Image processing unit>

The image processing unit 23 executes image processing on the image data under control of the second control unit 22. The image data is, for example, an image of the weft yarn captured by the camera 12. The image processing unit 23 of the present embodiment may execute, for example, adjustment processing and superimposed display processing as the image processing. The adjustment processing is processing for increasing brightness of the image data. The superimposed display processing is processing for superimposedly display a marker and a value of the delay angle on the image data. Note that the marker is a sign used for indicating a particular position on the image data. The marker is, for example, a stamp such as a line or an arrow set as desired. Note that the image processing unit 23 may execute the image processing again on the image data on which the image processing has already been executed. That is, as long as the image data includes the image captured by the camera 12, the image data may be data before the image processing or after the image processing.

### <Communication unit>

The communication unit 24 wirelessly communicates with an on-site communication terminal 30 and a cloud 40, which are described later, under control of the second control unit 22. In the present embodiment, the communication unit 24 communicates with the on-site communication terminal 30 through a Wi-Fi connection. The communication unit 24 communicates with the cloud 40 through a network. The communication unit 24 sends or receives various data to or from the on-site communication terminal 30 and the cloud 40.

### <<On-site communication terminal>>

The on-site communication terminal 30 is a terminal used by an on-site operator in a worksite inside a factory. The on-site communication terminal 30 is used as an input/output device for the stroboscope 10. The on-site communication terminal 30 of the present embodiment is a communication terminal such as a smartphone or a tablet. The on-site communication terminal 30 includes a touch panel 31, a communication unit 32, and a terminal control unit 33. The touch panel 31 serves as both an input unit and a display unit. The terminal control unit 33 includes a CPU and a memory, which are not illustrated. The terminal control unit 33 provides overall controls of the on-site communication terminal 30. The terminal control unit 33 controls the touch panel 31 and the communication unit 32. The memory of the terminal control unit 33 stores an observation application for worksite. The observation application for worksite includes programs for causing the CPU to execute display processing and programs for causing the CPU to execute sending processing.

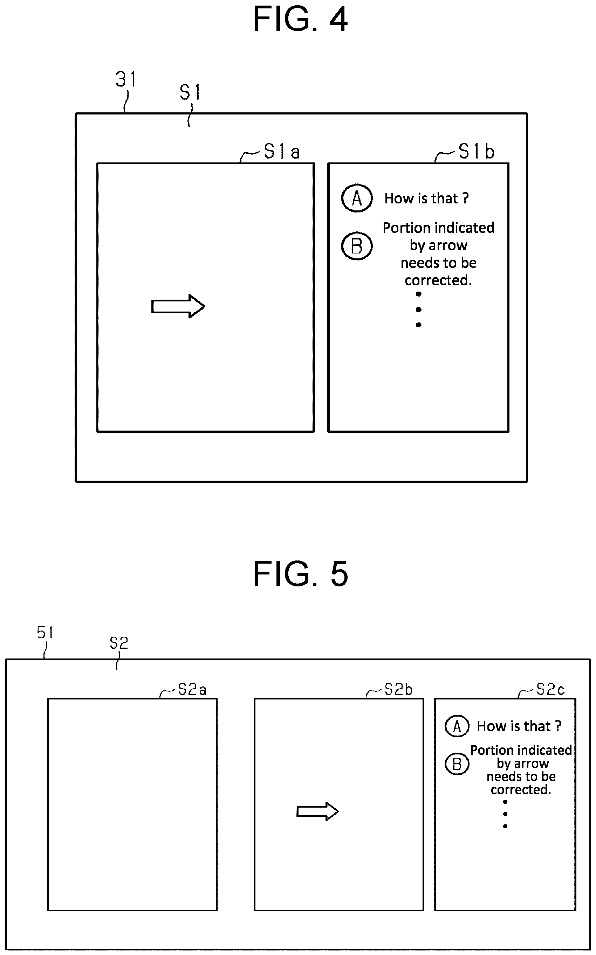

As illustrated in FIG. 4, as the display processing, the terminal control unit 33 displays an observation screen S1 stored in the memory on the touch panel 31. The observation screen S1 has an image data display screen S1a and a chat screen S1b. When the communication unit 32 receives data from the stroboscope 10, the terminal control unit 33 reflects the received data on the observation screen S1, and then, displays the observation screen S1 on the touch panel 31.

When data are input to the touch panel 31, the terminal control unit 33 sends the input data to the communication unit 32 as the sending processing.

### «Cloud»

The cloud 40 is an external server. The cloud 40 communicates with the stroboscope 10 and the off-site communication terminal 50. The cloud 40 communicates with the off-site communication terminal 50 through the network. The cloud 40 sends or receives various data to or from the stroboscope 10 and the off-site communication terminal 50. The cloud 40 forwards the data sent from the communication device 10b of the stroboscope 10 to the off-site communication terminal 50. The cloud 40 forwards data received from the off-site communication terminal 50 to the stroboscope 10. That is, the cloud 40 mediates between the stroboscope 10 and the off-site communication terminal 50 for sending and receiving the data. The cloud 40 also accumulates the data received from the stroboscope 10 and the data received from the off-site communication terminal 50.

### «Off-site communication terminal»

The off-site communication terminal 50 is an external communication terminal used by an off-site operator in a remote place outside the factory. The off-site communication terminal 50 of the present embodiment is a PC. The off-site communication terminal 50 includes a display screen 51, an input unit 52, a communication unit 53, and a terminal control unit 54. The display screen 51 is a display. The input unit 52 is, for example, a mouse or a keyboard. The terminal control unit 54 includes a CPU and a memory, which are not illustrated. The terminal control unit 54 provides overall controls of the off-site communication terminal 50. The terminal control unit 54 controls the display screen 51 and the communication unit 53. The memory stores an observation application for remote place. The observation application for remote place includes programs for causing the CPU to execute display processing and programs for causing the CPU to execute sending processing.

As illustrated in FIG. 5, as the display processing, the terminal control unit 54 displays an observation screen S2 stored in the memory on the display screen 51. The observation screen S2 includes a setting screen S2a, an image data display screen S2b, and a chat screen S2c. That is, the observation screen S2 is a screen that has the setting screen S2a in addition to the observation screen S1. The setting screen S2a is a screen with which the off-site operator performs various settings of the stroboscope 10. In the present embodiment, the off-site operator may input the parameters related to the light-emitting device 11, input the parameters related to the camera 12, input the delay angle, and select the operation mode with the setting screen S2a. That is, the off-site operator, with the off-site communication terminal 50, may perform the same operations as those performed by the on-site operator with the operation unit 14. When the communication unit 53 receives data from the cloud 40, the terminal control unit 54 reflects the received data on the observation screen S2, and then, displays the observation screen S2 on the display screen 51.

When the data is input to the input unit 52 as the sending processing, the terminal control unit 54 sends the input data to the communication unit 53.

### <<Operation of stroboscope>>

The following will describe an operation of the stroboscope 10. The stroboscope 10 of the present embodiment has a plurality of operation modes. The stroboscope 10 has a first operation mode, a second operation mode, and a third operation mode.

### <First operation mode>

The first operation mode is a mode in which the stroboscope 10 performs basic operations as the stroboscope. The first operation mode is used, for example, when an operator A in a weaving factory visually observes a state in which the weft yarn travels in order to adjust the loom 100.

The operator A inputs the delay angle with the operation unit 14. The trigger control unit 13 outputs the trigger signals to the light-emitting device 11 based on the external input signals input from the loom 100 and the delay angle input from the operation unit 14. The light-emitting device 11 emits light in response to the trigger signals input from the trigger control unit 13. The loom 100 is illuminated by the light emitted from the light-emitting device 11, and thus, the operator A may visually observe the traveling state of the weft yarn at the delay angle input by the operator A.

### <Second operation mode>

The second operation mode is a mode in which an image is captured by the camera 12 and data are sent or received between the stroboscope 10 and the on-site communication terminal 30, in addition to the operation in the first operation mode. In the second operation mode, the data which is sent and received between the stroboscope 10 and the on-site communication terminal 30 are image data.

The second operation mode is used, for example, in a case where it is difficult for the operator A to visually observe the observation target. Examples of such a case include a case where the operator cannot visually observe the observation target because the observation target is hidden from the operator and a case where although the operator can visually observe the observation target, the operator is turned into an unnatural position when trying to see the observation target.

The operator A starts up the observation application for worksite in the on-site communication terminal 30. The terminal control unit 33 of the on-site communication terminal 30 displays the observation screen S1 on the touch panel 31. The operator A inputs the delay angle with the operation unit 14, similarly to the operation in the first operation mode.

The trigger control unit 13 outputs the trigger signals based on the external input signals input from the loom 100 and the delay angle input from the operation unit 14. In the second operation mode, the trigger control unit 13 outputs the trigger signals not only to the light-emitting device 11 but also to the camera 12. The camera 12 captures an image in response to the trigger signals input from the trigger control unit 13. A timing at which the camera 12 captures the image coincides with a timing at which the light-emitting device 11 emits light. That is, the camera 12 captures the image in synchronization with the emission of the light by the light-emitting device 11.

The image processing unit 23 executes the image processing on the image captured by the camera 12. The communication device 10b sends the image data on which the image processing is executed by the image processing unit 23 to the on-site communication terminal 30. The communication unit 32 of the on-site communication terminal 30 receives the image data from the communication device 10b. The terminal control unit 33 of the on-site communication terminal 30 reflects the image data received by the communication unit 32 on the image data display screen S1a, and then, displays the observation screen S1 on the touch panel 31. The operator A can observe the traveling state of the weft yarn by the image data displayed on the touch panel 31 of the on-site communication terminal 30.

### <Third operation mode>

The third operation mode is a mode in which data is sent to or received from the cloud 40, in addition to the operation of the second operation mode. In the third operation mode, the data that are sent or received between the stroboscope 10 and the on-site communication terminal 30 includes image data, text data, and marking data. In the third operation mode, the data that are sent or received between the stroboscope 10 and the cloud 40 includes image data, text data, marking data, and setting data related to the setting of the stroboscope 10.

The third operation mode is used, for example, in the following case. The operator A may adjust the loom 100 while being supported by an expert B who is skilled in adjusting the loom 100. Here, the expert B may be in a remote place outside the weaving factory. In this case, not only the operator A but also the expert B need to observe the traveling state of the weft yarn. Furthermore, the operator A preferably adjusts the loom 100 while communicating with the expert B. In addition, when the operator A does not have enough experience in setting up the stroboscope 10, the expert B may set up the stroboscope 10 instead of the operator A.

### <Sending or receiving of setting data>

The following will describe a case where the expert B sets up the stroboscope 10.

The expert B starts up the observation application for remote place in the off-site communication terminal 50. The terminal control unit 54 of the off-site communication terminal 50 displays the observation screen S2 on the display screen 51. The expert B inputs the delay angle as the setting data into the setting screen S2a with the input unit 52. The off-site communication terminal 50 sends the input delay angle to the cloud 40. The cloud 40 sends the delay angle received from the off-site communication terminal 50 to the stroboscope 10. The delay angle sending unit 21c of the stroboscope 10 sends the delay angle received by the communication unit 24 of the communication device 10b to the trigger control unit 13. Note that the setting data are not limited to the delay angle. The setting data may be the parameters related to the light-emitting device 11 and the camera 12.

### <Sending or receiving of image data>

The communication device 10b of the stroboscope 10 sends the same data as the image data sent to the on-site communication terminal 30 to the cloud 40 corresponding to a data receiver. The cloud 40 forwards the image data received from the stroboscope 10 to the off-site communication terminal 50 of the expert B. In addition, the cloud 40 stores the image data received from the stroboscope 10.

The observation application for remote place in the off-site communication terminal 50 of the expert B is running . The terminal control unit 54 of the off-site communication terminal 50 displays the observation screen S2 on the display screen 51. The communication unit 53 of the off-site communication terminal 50 receives the image data from the cloud 40. The terminal control unit 54 of the off-site communication terminal 50 reflects the image data received by the communication unit 53 on the image data display screen S2b, and then, displays the observation screen S2 on the display screen 51. The expert B can observe the traveling state of the weft yarn by the image data displayed on the display screen 51 of the off-site communication terminal 50.

As described in the second operation mode, the image data sent from the communication device 10b to the on-site communication terminal 30 are displayed on the touch panel 31. Accordingly, the operator A and the expert B can share the image data.

### <Sending or receiving of text data>

The operator A inputs a message with the touch panel 31 of the on-site communication terminal 30. The on-site communication terminal 30 sends text data corresponding to the input message to the stroboscope 10. The communication device 10b of the stroboscope 10 sends the received text data to the cloud 40.

The cloud 40 sends the received text data to the off-site communication terminal 50. The communication unit 53 of the off-site communication terminal 50 receives the text data from the cloud 40. The terminal control unit 54 of the off-site communication terminal 50 restores the message from the text data received by the communication unit 53. The terminal control unit 54 reflects the restored message on the chat screen S2c, and then, displays the observation screen S2 on the display screen 51. The expert B can check the message from the operator A by the chat screen S2c displayed on the display screen 51.

The expert B inputs a message with the input unit 52 of the off-site communication terminal 50. The off-site communication terminal 50 sends the text data corresponding to the input message to the cloud 40. The cloud 40 sends the received text data to the stroboscope 10. The communication device 10b of the stroboscope 10 sends the received text data to the on-site communication terminal 30.

The communication unit 32 of the on-site communication terminal 30 receives the text data from the communication device 10b. The terminal control unit 33 of the on-site communication terminal 30 restores the message from the text data received by the communication unit 32. The terminal control unit 33 reflects the restored message on the chat screen S1b, and then, displays the observation screen S1 on the touch panel 31. The operator A can check the message from the expert B by the chat screen S1b displayed on the touch panel 31.

Thus, the operator A and the expert B can communicate with each other through chats.

### <Sending or receiving of marking data>

The operator A inputs a marker for indicating a particular position on the image data with the touch panel 31 of the on-site communication terminal 30. The on-site communication terminal 30 sends marking data corresponding to the input marker to the stroboscope 10. The marking data are data for indicating the particular position on the image data. The marking data includes data related to a type of the marker and a position of the marker on the image data, for example.

The image processing unit 23 executes the superimposed display processing on the image data based on the marking data received by the communication unit 24 of the stroboscope 10 . The communication device 10b sends the image data on which the marker is superimposedly displayed to the cloud 40. The cloud 40 sends the received image data to the off-site communication terminal 50.

The communication unit 53 of the off-site communication terminal 50 receives the image data on which the marker is superimposedly displayed from the cloud 40. The terminal control unit 54 of the off-site communication terminal 50 reflects the image data received by the communication unit 53 on the image data display screen S2b, and then, displays the observation screen S2 on the display screen 51. Due to the marker on the image data displayed on the display screen 51, the expert B can check the position on the image data that is indicated by the operator A.

The expert B inputs a marker for indicating a particular position on the image data with the input unit 52 of the off-site communication terminal 50. The off-site communication terminal 50 sends marking data corresponding to the input marker to the cloud 40. The cloud 40 sends the received marking data to the stroboscope 10.

The image processing unit 23 executes the superimposed display processing on the image data based on the marking data received by the communication unit 24 of the stroboscope 10 . The communication device 10b sends the image data on which the marker is superimposedly displayed to the on-site communication terminal 30.

The communication unit 32 of the on-site communication terminal 30 receives the image data on which the marker is superimposedly displayed from the communication device 10b. The terminal control unit 33 of the on-site communication terminal 30 reflects the image data received by the communication unit 32 on the image data display screen S1a, and then, displays the observation screen S1 on the touch panel 31. With the marker of the image data displayed on the touch panel 31, the operator A can check the position on the image data that is indicated by the expert B. Thus, the operator A and the expert B can share the particular position on the image data.

The following will describe operations and advantageous effects of the present embodiment.
(1) The communication device 10b sends the image data including the image captured by the camera 12 to the cloud 40. The cloud 40 forwards the image data received from the communication device 10b to the off-site communication terminal 50. The off-site operator can observe the traveling state of the weft yarn by the display screen 51 of the off-site communication terminal 50. The on-site operator does not need to send the image data to the off-site communication terminal 50, so that a time required until the off-site operator observes the weft yarn is shortened.
(2) The communication device 10b sends the image data to the on-site communication terminal 30 including the touch panel 31. Accordingly, the on-site operator can observe the traveling state of the weft yarn by the touch panel 31 of the on-site communication terminal 30. Thus, the on-site operator can observe the traveling state of the weft yarn also in the case where it is difficult for the on-site operator to visually observe the observation target.
   In addition, the communication device 10b sends the same data as the image data sent to the on-site communication terminal 30 to the cloud 40. The cloud 40 forwards the image data received from the communication device 10b, that is, the same data as the image data sent to the on-site communication terminal 30, to the off-site communication terminal 50. The same image data as the image data displayed on the touch panel 31 of the on-site communication terminal 30 are displayed on the display screen 51 of the off-site communication terminal 50. Accordingly, the on-site operator having the on-site communication terminal 30 and the off-site operator having the off-site communication terminal 50 can share the image data. Furthermore, the off-site operator can use the image data as a reference when controlling the strobe device 10a from the remote place.
(3) The communication device 10b sends or receives the text data to or from the on-site communication terminal 30 and the off-site communication terminal 50. Thus, the on-site operator and the off-site operator can communicate with each other through the chats.
   Note that although the on-site operator and the off-site operator can communicate with each other by the other communication tool such as a landline phone, the tool does not have always good reception. In addition, under a noisy environment such as an inside of the weaving factory, even when the reception is good, voice communication may not be suitable. The chats are effective in such a case.
   Furthermore, the communication by the chats reduces misspeaking and mishearing, which may occur in the voice communication.
(4) The communication device 10b includes the image processing unit 23. The communication device 10b receives the marking data corresponding to the marker from the on-site communication terminal 30 and the off-site communication terminal 50. The image processing unit 23 superimposedly displays the marker on the image data based on the marking data. The communication device 10b sends the image data on which the marker is superimposedly displayed to the on-site communication terminal 30 and the off-site communication terminal 50. Thus, the on-site operator and the off-site operator can share the particular position on the image data by the marker which is superimposedly displayed on the image data. As a result, the on-site operator and the off-site operator can communicate with each other smoothly.
(5) When the strobe device 10a and the communication device 10b are integrated with each other, a space where both the strobe device 10a and the communication device 10b are disposed is required, which makes observation difficult in a narrow place. On the contrary, in the present embodiment, the strobe device 10a and the communication device 10b are separate entities. In this case, it is only necessary to secure a space where the strobe device 10a is disposed, which makes the observation possible in the narrow place.
(6) The cloud 40 accumulates the image data. Accordingly, knowledge for the operation of the loom 100 is accumulated.
(7) The communication device 10b includes the light-emitting device control unit 21a that controls the parameters related to the light-emitting device 11. Accordingly, the light-emitting device 11 may be operated in a manner suitable for observation.
(8) The communication device 10b includes the camera control unit 21b that controls the parameters related to the camera 12. Accordingly, the camera 12 may capture an image in a suitable manner for the observation target. This causes the weft yarn, which is the observation target on the image data, to be seen more clearly.
(9) The image processing unit 23 executes the adjustment processing for increasing brightness of the image data. In this case, there is no need to increase the brightness of the image data by making an exposure time of the camera 12 longer, so that the exposure time of the camera 12 is shortened. Accordingly, this reduces blurring of the weft yarn to be captured.
(10) The image processing unit 23 superimposedly displays the value of the delay angle on the image data. This makes it easier for the operator to grasp a relationship between the delay angle and the traveling state of the weft yarn.
(11) The stroboscope 10 has the plurality of operation modes. Accordingly, the stroboscope 10 is operated in accordance with a situation for observation.
(12) The stroboscope 10 is used for adjusting the loom 100. In the adjustment of the loom 100, the off-site operator may observe the traveling state of the weft yarn. Accordingly, it is effective that the time required until the off-site operator observes the observation target is shortened.

The present embodiment may be modified as follows. The present embodiment and the modifications may be combined with each other as long as they technically contradict each other.

As long as the stroboscope 10 has the third operation mode, the stroboscope 10 does not need to have the first operation mode and the second operation mode.

The third operation mode may be used, for example, when only the off-site operator observes the observation target with the stroboscope 10. In this case, the communication device 10b does not need to send the image data to the on-site communication terminal 30. When the communication device 10b does not send the image data to the on-site communication terminal 30, the communication device 10b sends the image date including the image captured by the camera 12 only to the cloud 40.

As long as the camera 12 captures an image in synchronization with the emission of light by the light-emitting device 11, the trigger control unit 13 does not necessarily need to send the trigger signals to the camera 12.

The camera 12 may capture images continuously. That is, the image data may be a video.

When only the off-site worker operates the strobe device 10a, the strobe device 10a does not need to include the operation unit 14.

The communication device 10b may have a connection port to which the external memory is connectable. The external memory is, for example, an SD card or a USB memory. The second control unit 22 stores the image data to the external memory. In this case, for example, the image data are stored. In addition, the image data stored in the external memory is attached to an e-mail or stored on the cloud, so that the image data is shared with the off-site operator. However, in this case, a time lag between a time when the camera 12 captures an image and a time when the off-site operator receives the image data is increased.

The strobe device 10a may be formed such that the wireless communication is usable. In this case, the strobe device 10a and the communication device 10b may be connected to each other in the wireless communication. That is, the first control unit 21 may control the light-emitting device 11 and the camera 12 and may send the delay angle to the trigger control unit 13 through the communication unit 24.

The stroboscope 10 may be formed such that the off-site operator can check setting information set by the on-site operator with the operation unit 14. Specifically, the communication device 10b may not only receive the setting data from the off-site communication terminal 50 through the cloud 40 but also send the setting data to the off-site communication terminal 50 through the cloud 40.

The communication device 10b may be connected to the on-site communication terminal 30 through an input/output device and a connection cable, instead of the wireless communication. The input/output device is, for example, a touch panel. The input/output device may be formed of a display unit such as a display and an input unit such as a mouse and a keyboard. The second control unit 22 sends or receives various data to or from the input/output device.

The communication device 10b does not need to include the image processing unit 23. In this case, the communication device 10b sends the image captured by the camera 12 to the on-site communication terminal 30 and the cloud 40 without any processing.

The image processing unit 23 may execute only one of the adjustment processing and the superimposed processing. Furthermore, the image processing unit 23 may execute image processing other than the adjustment processing and the superimposed display processing.

As long as the first control unit 21 has the delay angle sending unit 21c, the first control unit 21 does not need to have at least one of the light-emitting device control unit 21a or the camera control unit 21b.

The communication device 10b does not need to send or receive text data to or from the on-site communication terminal 30 and the cloud 40. In this case, the chat screens S1b, S2c of the observation screens S1, S2 are unnecessary.

The on-site operator and the off-site operator may communicate with each other with a communication method other than chats. For example, the on-site operator and the off-site operator may communicate with each other with internet calls or a telephone. In this case, examples of the communication tool usable by the on-site operator include the on-site communication terminal 30, a calling application or the like of a communication terminal other than the on-site communication terminal 30, and a landline phone. Examples of the communication tool usable by the off-site operator include the off-site communication terminal 50, a calling application or the like of a communication tool other than the off-site communication terminal 50, and a landline phone.

The communication device 10b does not need to receive the marking data from the on-site communication terminal 30 and the cloud 40.

The data receiver to which the communication device 10b sends data is not limited to the cloud 40. The data receiver to which the communication device 10b sends data may be the off-site communication terminal 50. That is, the communication device 10b may communicate with the off-site communication terminal 50 without passing through the cloud 40.

The external server is not limited to the cloud 40 . The external server may be, for example, a server installed in the weaving factory, as long as the external server can forward the image data received from the communication device 10b to the off-site communication terminal 50.

The cloud 40 may include a weft yarn detection unit that detects an image of the weft yarn from the image data. The weft detection unit has a trained model that has been trained on the image data and the image of the weft yarn on the image data as teaching data. The weft yarn detection unit detects the image of the weft yarn on the image data from the image data using the trained model. The cloud 40 sends the detection result by the weft detection unit to the communication device 10b.

The cloud 40 may include a determination unit that determines quality of the traveling state of the weft yarn in addition to the above-described weft yarn detection unit. The determination unit has a trained model that has been trained on the traveling state of the weft yarn and the quality of the traveling state of the weft yarn as teaching data. The detection unit determines the quality of the traveling state of the weft yarn detected by the weft yarn detection unit using the trained model. The cloud 40 sends the determination result by the determination unit to the communication device 10b.

The strobe device 10a and the communication device 10b may be integrated with each other.

The observation target in the observation with the stroboscope 10 is not limited to the weft yarn. The observation target may be the loom 100 itself. Furthermore, the observation target may be something that is not related to the loom 100.

### Reference Signs List

10 stroboscope
10a strobe device
10b communication device
11 light-emitting device
12 camera
13 trigger control unit
23 image processing unit
30 on-site communication terminal as input/output device
31 touch panel as display unit and input unit
40 cloud as external server
50 off-site communication terminal as external communication terminal
51 display screen

## Claims

1. A stroboscope comprising:
a strobe device including a light-emitting device, a camera, and a trigger control unit that outputs a trigger signal to the light-emitting device, the trigger signal causing the light-emitting device to emit light; and
a communication device configured to send image data including an image captured by the camera to a data receiver, wherein
the data receiver is an external communication terminal that has a display screen or an external server that forwards the image data sent from the communication device to the external communication terminal.

2. The stroboscope according to claim 1, wherein
the communication device sends the image data to an input/output device having a display unit and an input unit and sends the same data as the image data sent to the input/output device to the data receiver.

3. The stroboscope according to claim 2, wherein
the communication device sends or receives text data to or from the data receiver and the input/output device.

4. The stroboscope according to claim 2 or 3, wherein
the communication device includes an image processing unit that executes image processing on the image data,
the communication device receives marking data from the data receiver and the input/output device, the marking data being a data for indicating a particular position on the image data,
the image processing unit superimposedly displays a marker on the image data based on the marking data, the marker being a sign used for indicating the particular position on the image data, and
the communication device sends the image data on which the marker is superimposedly displayed to the data receiver and the input/output device.

5. The stroboscope according to any one of claims 1 to 4, wherein
the strobe device and the communication device are separate entities.

## Amended claims

### Amended claims under Art. 19.1 PCT

1. A stroboscope comprising:
a strobe device including a light-emitting device, a camera, and a trigger control unit that outputs a trigger signal to the light-emitting device, the trigger signal causing the light-emitting device to emit light; and
a communication device configured to send image data including an image captured by the camera to a data receiver, wherein
the data receiver is an external communication terminal that has a display screen or an external server that forwards the image data sent from the communication device to the external communication terminal, and
the communication device sends the image data to an input/output device having a display unit and an input unit and sends the same data as the image data sent to the input/output device to the data receiver.

3. The stroboscope according to claim 1, wherein
the communication device sends or receives text data to or from the data receiver and the input/output device.

4. The stroboscope according to claim 1 or 3, wherein
the communication device includes an image processing unit that executes image processing on the image data,
the communication device receives marking data from the data receiver and the input/output device, the marking data being a data for indicating a particular position on the image data,
the image processing unit superimposedly displays a marker on the image data based on the marking data, the marker being a sign used for indicating the particular position on the image data, and
the communication device sends the image data on which the marker is superimposedly displayed to the data receiver and the input/output device.

5. The stroboscope according to any one of claims 1, 3, and 4, wherein
the strobe device and the communication device are separate entities.
